# EUROPEAN PATENT APPLICATION

(11) **EP 2 693 649 A1**
(43) Date of publication of application: **05.02.2014**
(21) Application number: 11862314.9
(22) Date of filing: 31.03.2011
(51) Int. Cl.: H04B 3/04

(54) **INFORMATION PROCESSING APPARATUS, INFORMATION PROCESSING SYSTEM, AND COMMUNICATION CONTROL METHOD**

(71) Applicant: Fujitsu Limited, Kawasaki-shi, Kanagawa 211-8588 (JP)
(72) Inventor: MIYAUCHI, Keiji, Kawasaki-shi Kanagawa 211-8588 (JP)
(74) Representative: HOFFMANN EITLE
(86) International application number: PCT/JP2011/058229
(87) International publication number: WO 2012/131982

(57) **Abstract**

To improve the accuracy of signal conditioning of a signal that is transmitted between an information processing apparatus and a device.

An information processing apparatus (10) is able to communicate with a device (20) at a plurality of transmission rates. A signal processing unit (11) processes a signal that is transmitted to and from the device (20). A storage unit (12) stores parameter information (12a) indicating a correspondence between a transmission rate and a parameter for controlling signal conditioning performed by the signal processing unit (11). A control unit (13) selects a parameter appropriate for a transmission rate determined in cooperation with the device (20), with reference to the parameter information (12a) stored in the storage unit (12), and applies the selected parameter to the signal processing unit (11).

## Description

### Technical Field

The embodiments discussed herein relate to an information processing apparatus, an information processing system, and a communication control method.

### Background Art

An information processing apparatus and a device are connected to each other using a transmission medium such as a cable, and transmit a signal therebetween with a transmission method such as a differential transmission method. These information processing apparatus and device may perform signal conditioning such as emphasis and equalization at their interfaces. The emphasis is a signal conditioning process that is performed by a transmitter on a signal to be transmitted, whereas the equalization is a signal conditioning process that is performed by a receiver on a received signal. For example, the signal conditioning compensates for distortion in a signal by amplifying high frequency components. Such signal conditioning is able to reduce signal waveform deformation caused by transmission and to thereby reduce reception errors at a receiver.

By the way, signal conditioning at a fixed level in an interface may lead to insufficient or excessive compensation, thereby failing to realize a satisfactory reduction in reception errors. To deal with this, the level of the signal conditioning may be set variable. For example, there has been proposed a method of setting an amplification factor for a transmission signal according to the length of a cable and cable loss calculated by supplying a measurement signal to the cable. There has been another method of controlling the amount of equalization on the basis of data such as a cable length stored in a memory. There has been yet another method of reading data such as a cable length from a memory provided in a cable and performing equalization based on the read data.

### Citation List

### Patent Literature

PTL 1: Japanese Laid-open Patent Publication No. 2008-258840
PTL 2: Japanese Laid-open Patent Publication No. 5-291985
PTL 3: International Publication Pamphlet No. WO 2005/081659

### Summary of Invention

### Technical Problem

However, the amount of distortion in a signal transmitted between an information processing apparatus and a device may vary due to other causes than physical characteristics (for example, cable length, etc.) of a transmission medium. Therefore, the methods taught in the above PTLs 1 to 3 have room for improvement in the accuracy of signal conditioning.

The present invention has been made in view of the foregoing, and intends to provide an information processing apparatus, information processing system, and communication control method that realize an improvement in the accuracy of signal conditioning.

### Solution to Problem

There is provided an information processing apparatus capable of communicating with a device at a plurality of transmission rates. The information processing apparatus includes a signal processing unit, a storage unit, and a control unit. The signal processing unit processes a signal that is transmitted to and from the device. The storage unit stores parameter information indicating a correspondence between a transmission rate and a parameter for controlling signal conditioning performed by the signal processing unit. The control unit selects a parameter appropriate for a transmission rate determined in cooperation with the device, with reference to the parameter information stored in the storage unit, and applies the selected parameter to the signal processing unit.

Further, there is provided an information processing system capable of communicating with a device at a plurality of transmission rates. The information processing system includes a relay apparatus including a signal processing unit and a storage unit, and an information processing apparatus including a connecting unit and a control unit. The signal processing unit processes a signal that is transmitted to and from the device. The storage unit stores parameter information indicating a correspondence between a transmission rate and a parameter for controlling signal conditioning performed by the signal processing unit. The connecting unit connects with the relay apparatus. The control unit selects a parameter appropriate for a transmission rate determined between the information processing apparatus and the device, with reference to the parameter information stored in the storage unit via the connecting unit, and applies the selected parameter to the signal processing unit via the connecting unit.

Still further, there is provided a communication control method that is executed by an information processing apparatus capable of communicating with a device at a plurality of transmission rates. The communication control method includes detecting a transmission rate determined between the information processing apparatus and the device, selecting a parameter appropriate for the determined transmission rate with reference to a storage unit storing parameter information indicating a correspondence between a transmission rate and a parameter for controlling signal conditioning of a signal that is transmitted to and from the device, and applying the selected parameter to the information processing apparatus or a relay apparatus that processes a signal between the information processing apparatus and the device.

### Advantageous Effects of Invention

The above-described information processing apparatus, information processing system, and communication control method realize an improvement in an accuracy of signal conditioning.

The above and other objects, features and advantages of the present invention will become apparent from the following description when taken in conjunction with the accompanying drawings which illustrate preferred embodiments of the present invention by way of example.

### Brief Description of Drawings

[FIG. 1] FIG. 1 illustrates an information processing apparatus according to a first embodiment.
[FIG. 2] FIG. 2 is a block diagram illustrating an information processing system according to a second embodiment.
[FIG. 3] FIG. 3 is a block diagram illustrating interfaces according to the second embodiment.
[FIG. 4] FIG. 4 is a block diagram illustrating an example of a software configuration of the information processing system.
[FIG. 5] FIG. 5 illustrates an example of a parameter table.
[FIG. 6] FIG. 6 illustrates an example of a port management table.
[FIG. 7] FIG. 7 is a flowchart illustrating a parameter setting process.
[FIG. 8] FIG. 8 is a sequence diagram illustrating the parameter setting process.
[FIG. 9] FIG. 9 is a block diagram illustrating interfaces according to a third embodiment.
[FIG. 10] FIG. 10 illustrates an example of installation of a server apparatus and devices.
[FIG. 11] FIG. 11 is a block diagram illustrating interfaces according to a fourth embodiment.
[FIG. 12] FIG. 12 illustrates an example of a cable length table.
[FIG. 13] FIG. 13 is a block diagram illustrating an information processing system according to a fifth embodiment.

### Description of Embodiments

Hereinafter, the embodiments will be described with reference to the accompanying drawings.

### (First Embodiment)

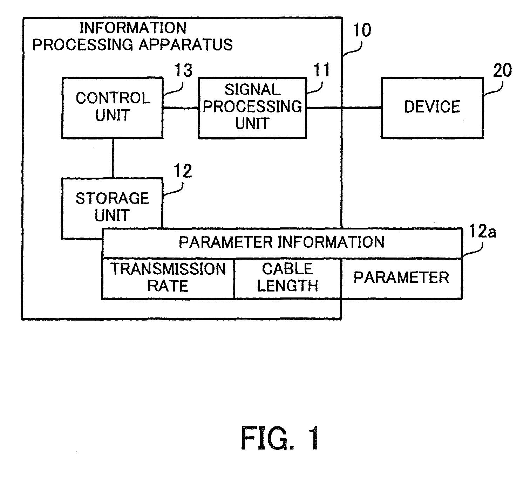

FIG. 1 illustrates an information processing apparatus according to a first embodiment. An information processing apparatus 10 of the first embodiment communicates with a device 20 at any one of a plurality of transmission rates. The information processing apparatus 10 and device 20 are connected to each other via, for example, a cable. The information processing apparatus 10 includes a signal processing unit 11, a storage unit 12, and a control unit 13.

The signal processing unit 11 processes a signal that is transmitted to and from the device 20. The signal processing performed by the signal processing unit 11 includes signal conditioning. For example, the signal processing unit 11 emphasizes a signal to be transmitted to the device 20. In addition, the signal processing unit 11 equalizes a signal received form the device 20. The signal processing unit 11 may be designed to perform either one or both of the emphasis and equalization as the signal conditioning.

The storage unit 12 stores parameter information 12a. The storage unit 12 may be implemented as a ROM (Read Only Memory). The parameter information 12a includes a plurality of parameters for controlling the signal conditioning performed by the signal processing unit 11. By changing a parameter to be applied, the level (for example, high-frequency amplification factor, etc.) of the signal conditioning by the signal processing unit 11 is changed. The parameter information 12a indicates at least a correspondence between a transmission rate and a parameter. The parameter information 12a may indicate a correspondence between a combination of transmission rate and cable length and a parameter.

The control unit 13 controls the signal conditioning performed by the signal processing unit 11 with reference to the storage unit 12. The control unit 13 may be implemented as a CPU (Central Processing Unit) and RAM (Random Access Memory), and the control exercised by the control unit 13 may be defined as a driver program. The control unit 13 confirms a transmission rate determined between the information processing apparatus 10 and the device 20. Then, the control unit 13 selects a parameter appropriate for the determined transmission rate from the parameters indicated by the parameter information 12a, and applies the selected parameter to the signal processing unit 11.

In addition, the control unit 13 may select a parameter with the further consideration of the length of a cable connecting the information processing apparatus 10 and the device 20. For example, it is assumed that a storage unit (for example, ROM) for storing cable information indicating the length of the cable is provided in a connector of the cable. In this case, the control unit 13 may read the cable information from the cable, select a parameter appropriate for the determined transmission rate described above and the cable length indicated by the cable information, from the parameter information 12a, and applies the selected parameter to the signal processing unit 11.

If a plurality of ports for transmitting or receiving signals is provided in the information processing apparatus 10, the control unit 13 may confirm the transmission rate of each port and then select a parameter. The plurality of ports may be used for connection with a single device or for connections with a plurality of devices. The signal processing unit 11 may set different levels of signal conditioning for the respective ports. When a transmission rate between the information processing apparatus 10 and the device 20 is changed, the control unit 13 may re-select a parameter on the basis of the changed transmission rate.

In this connection, the information processing apparatus 10 may be connected to the device 20 via a relay device such as a switch. The signal processing unit 11 and storage unit 12 may be provided in the relay device. In this case, the control unit 13 refers to the parameter information 12a via an interface connected to the relay device, to select a parameter, and controls the signal conditioning performed by the signal processing unit 11.

In the information processing apparatus 10 according to the first embodiment, a transmission rate determined between the information processing apparatus 10 and the device 20 is detected. The storage unit 12 storing the parameter information 12a indicating a correspondence between a transmission rate and a parameter is referenced and a parameter appropriate for the determined transmission rate is selected. The selected parameter is applied to the information processing apparatus 10 or a relay device that processes a signal between the information processing apparatus 10 and the device 20, so that the signal conditioning is controlled.

As described above, the signal conditioning such as emphasis and equalization is performed with the consideration of a transmission rate, which is one of causes that influence the amount of distortion in a signal. This improves the accuracy of the signal conditioning and reduces signal reception errors. In addition, it is possible to further improve the accuracy of the signal conditioning by performing the signal conditioning with the further consideration of a cable length, which is another one of the causes that influence the amount of distortion in a signal.

### (Second Embodiment)

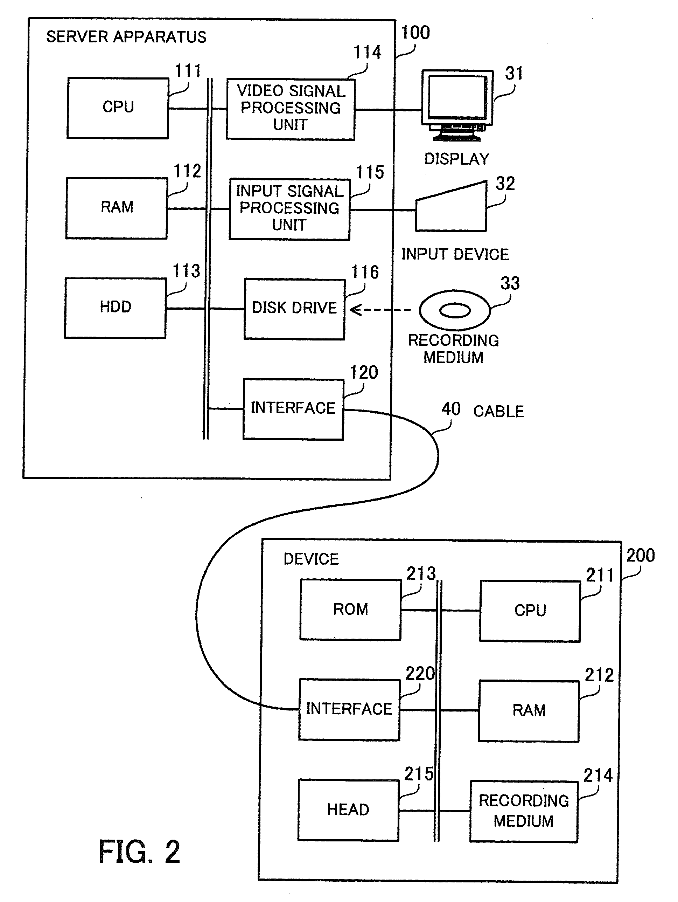

FIG. 2 is a block diagram illustrating an information processing system according to a second embodiment. An information processing system of the second embodiment includes a server apparatus 100 and a device 200. The server apparatus 100 and device 200 dynamically determine a transmission rate, and perform communications with each other.

The server apparatus 100 includes a CPU 111, a RAM 112, an HDD (Hard Disk Drive) 113, a video signal processing unit 114, an input signal processing unit 115, a disk drive 116, and an interface 120. These units are connected to a bus within the server apparatus 100.

The CPU 111 is an arithmetic device for controlling information processing in the server apparatus 100. The CPU 111 loads at least part of a program and data from the HDD 113 to the RAM 112 to execute the program. In this connection, the server apparatus 100 may be provided with a plurality of arithmetic devices to perform the information processing in a distributed manner.

The RAM 112 is a volatile memory for temporarily storing a program and data to be used by the CPU 111. In this connection, the server apparatus 100 may be provided with another type of memory than RAM, or a plurality of memories.

The HDD 113 is a non-volatile storage device for storing programs such as Operating System (OS) programs, driver programs, etc., and data for use in the information processing. The HDD 113 performs read and write on a built-in magnetic disk in accordance with instructions from the CPU 111. The server apparatus 100 may be provided with another type of non-volatile storage device (for example, SSD (Solid State Drive)) than HDD, or a plurality of storage devices.

The video signal processing unit 114 outputs a video signal to a display 31 connected to the server apparatus 100 in accordance with instructions from the CPU 111. For example, as the display 31, a CRT (Cathode Ray Tube) display, liquid crystal display, or another display may be used.

The input signal processing unit 115 transfers an input signal received from an input device 32 connected to the server apparatus 100, to the CPU 111. For example, as the input device 32, a pointing device such as a mouse, touch panel, etc., a keyboard, or another may be used.

The disk drive 116 is a driving device that reads a program and data from a recording medium 33. For example, as the recording medium 33, a magnetic disk such as flexible disk (FD), HDD, etc., an optical disc such as CD (Compact Disc), DVD (Digital Versatile Disc), etc., or a Magneto-Optical Disk (MO) may be used. The disk drive 116 stores, for example, the program and data read from the recording medium 33 in the RAM 112 or HDD 113 in accordance with instructions from the CPU 111.

The interface 120 connects with a cable 40. The interface 120 communicates with the device 200 via the cable 40. The interface 120 performs post-reception signal conditioning (equalization) on a signal received from the device 200. The device 200 also performs pre-transmission signal conditioning (emphasis) on a signal to be transmitted to the device 200. The signal conditioning is controlled by the CPU 111 running a driver program.

The device 200 is, for example, an external driving device such as an HDD or DVD drive. The device 200 includes a CPU 211, a RAM 212, a ROM 213, a recording medium 214, a head 215, and an interface 220. These units are connected to a bus within the device 200.

The CPU 211 is an arithmetic device for controlling information processing in the device 200. The CPU 211 loads at least part of a program and data from the ROM 213 to the RAM 212 to execute the program. The CPU 211 executes the program to control access to the recording medium 214 and communications via the interface 220.

The RAM 212 is a volatile memory for temporarily storing a program and data to be used by the CPU 211. In this connection, the device 200 may be provided with another kind of memory than RAM.

The ROM 213 is a non-volatile memory for storing programs such as firmware program, and data to be used in the information processing. In this connection, the device 200 may be provided with a rewritable non-volatile storage device (for example, flash memory).

The recording medium 214 is a built-in recording medium or removable portable recording medium. For example, as the recording medium 214, a magnetic disk, optical disc, magneto-optical disk, or another may be used.

The head 215 performs at least one of data read and write on the recording medium 214 under the control of the CPU 211.

The interface 220 connects with the cable 40. The interface 220 communicates with the server apparatus 100 via the cable 40. The interface 220 equalizes a signal received from the server apparatus 100. The server apparatus 100 also emphasizes a signal to be transmitted to the server apparatus 100. Such signal conditioning is controlled by the CPU 211 executing a firmware program.

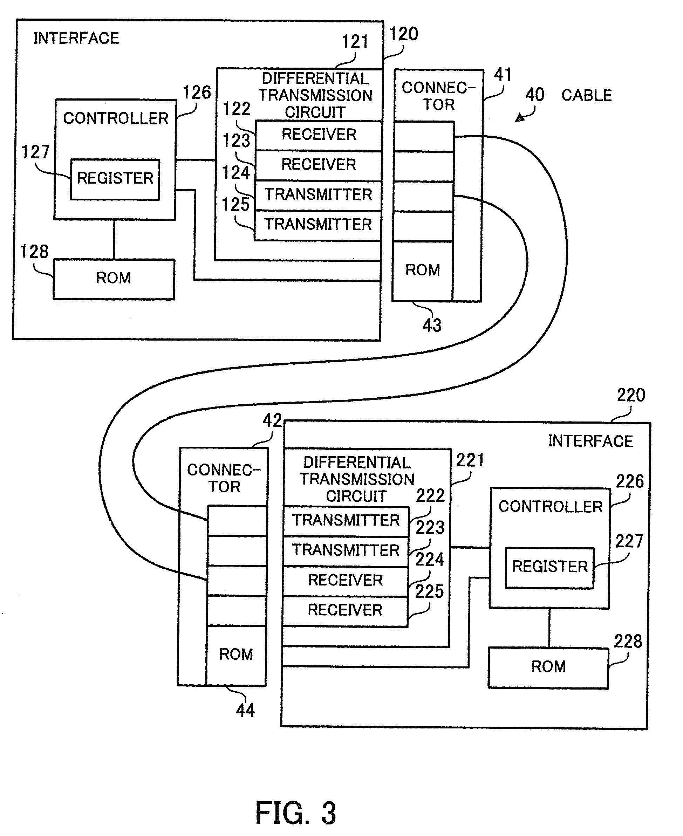

FIG. 3 is a block diagram illustrating interfaces according to the second embodiment. The interface 120 connects with a connector 41 provided on one end of the cable 40. The interface 220 connects with a connector 42 provided on the other end of the cable 40.

The interface 120 includes a differential transmission circuit 121, a controller 126, and a ROM 128. The differential transmission circuit 121 includes receivers 122 and 123 and transmitters 124 and 125. The controller 126 includes a register 127.

The differential transmission circuit 121 transmits and receives signals with a differential transmission method. In the differential transmission method, a transmission side outputs signals with opposite phases to two signal lines paired together, and a receiving side combines the signals of the two signal lines to analyze bits. The differential transmission circuit 121 includes four ports (ports #1 to #4), and perform signal processing with the differential transmission method at each port. The receiver 122 receives a signal at the port #1, whereas the receiver 123 receives a signal at the port #2. The transmitter 124 transmits a signal from the port #3, whereas the transmitter 125 transmits a signal from the port #4. The connector 41 includes four ports respectively corresponding to the ports #1 to #4.

The controller 126 controls the signal processing performed by the differential transmission circuit 121. The controller 126 uses values stored in the register 127 to adjust the levels (for example, high-frequency amplification factor) of equalization performed by the receivers 122 and 123 and emphasis performed by the transmitters 124 and 125. In addition, the controller 126 reads cable length information indicating the length of the cable 40 from a ROM 43 provided in the connector 41. For reading from the ROM 43, for example, an I2C (Inter-Integrated Circuit) signal line is used. The register 127 stores values for controlling the equalization and emphasis and a value indicating a transmission rate determined between the interface 120 and the interface 220.

The ROM 128 is a non-volatile memory for storing parameter information. The parameter information indicates a correspondence between a combination of transmission rate and cable length and parameters to be used for controlling equalization and emphasis (for example, values to be written in the register 127). Parameters to be applied to the equalization and emphasis are selected based on a transmission rate determined between the server apparatus 100 and the device 200, and the length of the cable 40 connecting them.

The interface 220 includes a differential transmission circuit 221, a controller 226, and a ROM 228. The differential transmission circuit 221 includes transmitters 222 and 223 and receivers 224 and 225. The controller 226 includes a register 227.

Similarly to the differential transmission circuit 121, the differential transmission circuit 221 transmits and receives signals with the differential transmission method. The differential transmission circuit 221 includes four ports, and performs signal processing with the differential transmission method at each port. The transmitters 222 and 223 transmit signals, and the receivers 224 and 225 receive signals. Similarly to the connector 41, the connector 42 includes four ports.

The controller 226 controls signal processing performed by the differential transmission circuit 221. The controller 226 uses values stored in the register 227 to adjust the levels of emphasis performed by the transmitters 222 and 223 and equalization performed by the receivers 224 and 225. The controller 226 also reads cable length information from a ROM 44 provided in the connector 42. For reading from the ROM 44, for example, an I2C signal line is used. The register 227 stores values for controlling the equalization and emphasis, and a value indicating a transmission rate.

The ROM 228 is a non-volatile memory for storing parameter information. Parameters to be applied to the equalization and emphasis are selected based on a transmission rate determined between the server apparatus 100 and the device 200 and the length of the cable 40.

In the cable 40, two signal lines paired together are connected to two of the four ports provided in each connector 41 and 42. One signal line connecting with one port is used for transmission from the connector 41 to the connector 42, and the other signal line connecting with the other port is used for transmission from the connector 42 to the connector 41. In the case where the cable 40 is connected to the interfaces 120 and 220, the transmitter 222 transmits a signal to the receiver 122, and the transmitter 124 transmits a signal to the receiver 224. The receiver 123 and transmitter 125 of the interface 120 and the transmitter 223 and receiver 225 of the interface 220 are not connected to any signal line, so they do not perform the signal processing.

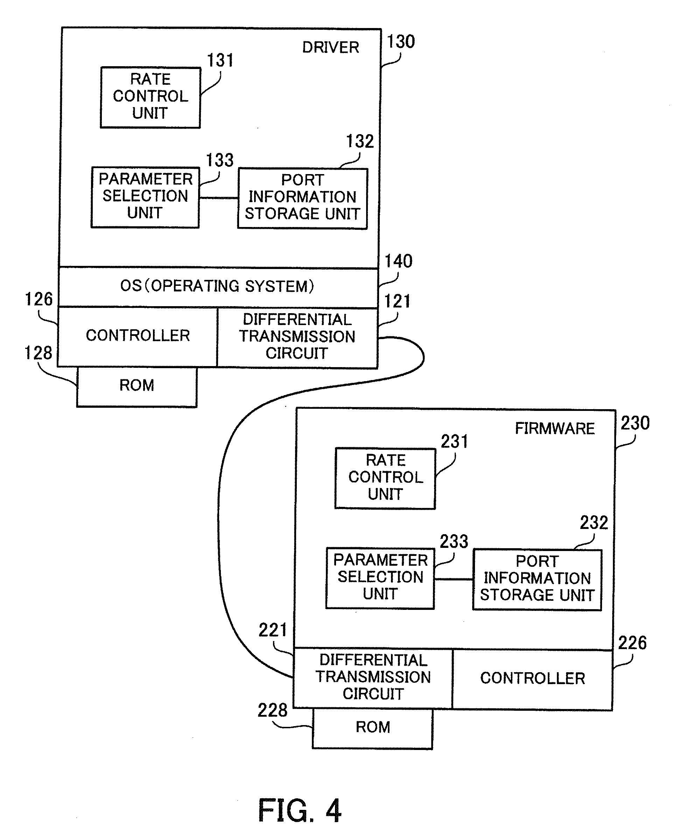

FIG. 4 is a block diagram illustrating an example of a software configuration of an information processing system. The server apparatus 100 includes a driver 130 and an OS 140. The driver 130 is implemented as a driver program that is executed by the CPU 111, and the OS 140 is implemented as an OS program that is executed by the CPU 111. The device 200 includes a firmware 230. The firmware 230 is implemented as a program that is executed by the CPU 211.

The driver 130 runs on the OS 140. The driver 130 includes a rate control unit 131, a port information storage unit 132, and a parameter selection unit 133.

The rate control unit 131 controls the controller 126 of the interface 120 to determine a transmission rate between the server apparatus 100 and the device 200. The transmission rate is determined when the server apparatus 100 and device 200 connect to each other, and may be changed even after the communication starts. The transmission rate is determined according to, for example, a training sequence. For example, such a method is considered that the server apparatus 100 and device 200 start communication at a predefined lowest rate, and then determines an upper limit rate of receiving a signal without fail by increasing the transmission rate stepwise. Another method may be that the server apparatus 100 and device 200 exchange information indicating their own communication capability to confirm a theoretical highest rate, and determine an upper limit rate of receiving a signal without fail by decreasing the transmission rate stepwise.

The port information storage unit 132 stores port information indicating a correspondence among a port provided in the differential transmission circuit 121, a transmission rate, and a cable length. The port information storage unit 132 is implemented as, for example, a storage area secured in the RAM 112.

The parameter selection unit 133 makes an inquiry to the controller 126 of the interface 120 to confirm a port currently used for communication by the differential transmission circuit 121. In addition, the parameter selection unit 133 accesses the register 127 provided in the controller 126 to confirm a transmission rate determined between the server apparatus 100 and the device 200. The parameter selection unit 133 also obtains cable length information from the cable 40 via the controller 126. The parameter selection unit 133 updates the port information stored in the port information storage unit 132 through the above process. Then, the parameter selection unit 133 selects an appropriate parameter for each port from the parameter information stored in the ROM 128, and writes the value in the register 127 provided in the controller 126.

The firmware 230 includes a rate control unit 231, a port information storage unit 232, and a parameter selection unit 233.

Similarly to the rate control unit 131, the rate control unit 231 controls the controller 226 of the interface 220 to determine a transmission rate between the server apparatus 100 and the device 200.

Similarly to the port information storage unit 132, the port information storage unit 232 stores port information indicating a correspondence among a port provided in the differential transmission circuit 221, a transmission rate, and a cable length. The port information storage unit 232 is implemented as, for example, a storage area secured in the RAM 212.

Similarly to the parameter selection unit 133, the parameter selection unit 233 confirms a port used for communication by the differential transmission circuit 211, and confirms a transmission rate determined between the server apparatus 100 and the device 200. The parameter selection unit 233 also obtains cable length information from the cable 40 via the controller 226. The parameter selection unit 233 selects an appropriate parameter for each port from the parameter information stored in the ROM 228, and writes the value in the register 227.

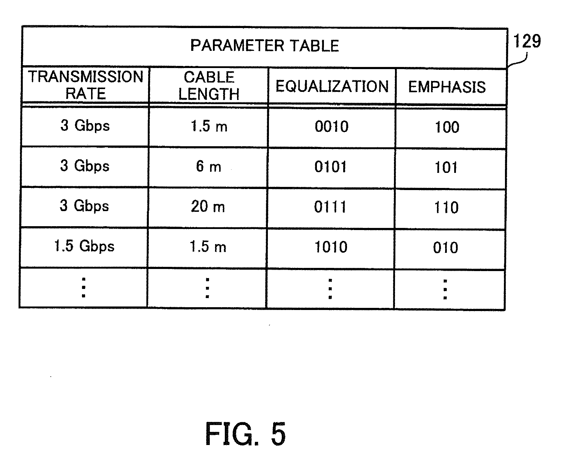

FIG. 5 illustrates an example of a parameter table. A parameter table 129 is stored in the ROM 128 of the interface 120. Such a parameter table is stored in the ROM 228 of the interface 220 as well. The parameter table 129 includes the following fields: Transmission Rate, Cable Length, Equalization, and Emphasis.

The Transmission Rate field contains transmission rates between the server apparatus 100 and the device 200. The transmission rates are expressed in units of bit per second (bps), for example. The Cable Length field contains cable lengths with respect to the cable 40 connecting the server apparatus 100 and device 200. The cable lengths are expressed in units of meter (m), for example. The Equalization field contains parameters for adjusting signal conditioning performed by the receivers 122 and 123. The Emphasis field contains parameters for adjusting signal conditioning performed by the transmitters 124 and 125. A parameter may be a value to be written in the register 127, or a value indicating the rate (for example, percentage (%)) or level (for example, decibel (dB)) of the equalization or emphasis.

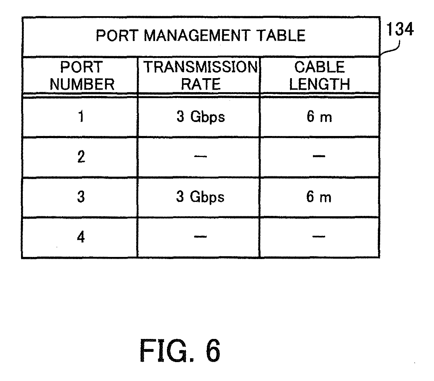

FIG. 6 illustrates an example of a port management table. A port management table 134 is stored in the port information storage unit 132, and is updated by the parameter selection unit 133. Such a port management table is stored in the port information storage unit 232 as well. The port management table 134 includes the following fields: Port Number, Transmission Rate, and Cable Length.

The Port Number field indicates the identification information of ports #1 to #4 corresponding to the receivers 122 and 123 and transmitters 124 and 125. The Transmission Rate field indicates transmission rates determined for the respective ports. The parameter selection unit 133 is able to confirm the current transmission rate with reference to the register 127 provided in the controller 126. The Cable Length field indicates the lengths of cables connected to the respective ports. The parameter selection unit 133 is able to confirm the cable length with reference to the ROM 43 provided in the connector 41, via the controller 126.

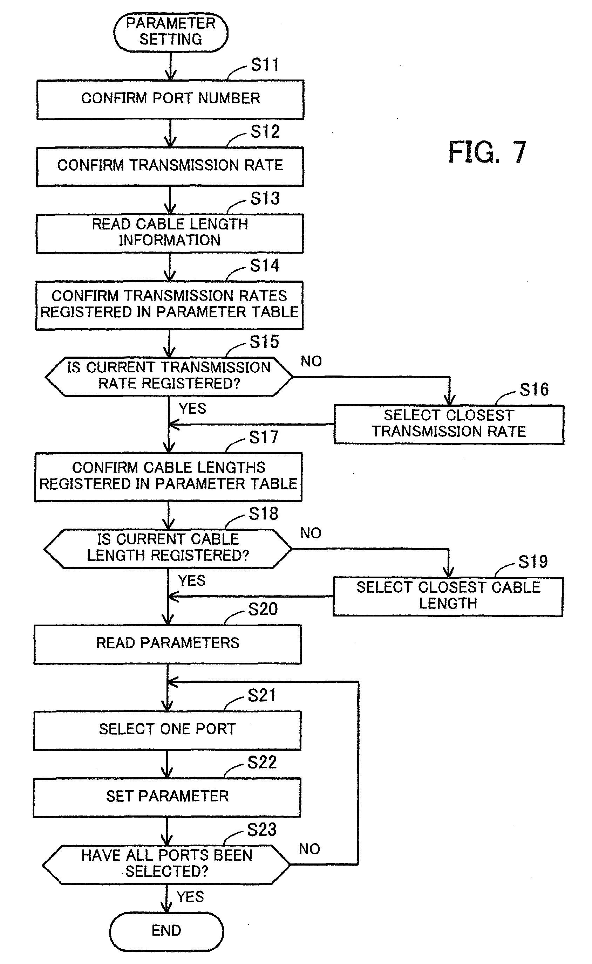

FIG. 7 is a flowchart illustrating a parameter setting process. This process of FIG. 7 is performed by each of the server apparatus 100 and device 200. The process will be described step by step, assuming that the server apparatus 100 performs the process.

(Step S11) The parameter selection unit 133 confirms the port number of a port used for signal transmission by making an inquiry to the controller 126. For example, the parameter selection unit 133 confirms that, out of the ports #1 to #4 provided in the differential transmission circuit 121, the ports #1 and #3 (corresponding to the receiver 122 and transmitter 124) are used.

(Step S12) The rate control unit 131 instructs the controller 126 to determine a transmission rate. The controller 126 controls the differential transmission circuit 121 to execute a procedure such as a training sequence in cooperation with the device 200, thereby determining an upper limit transmission rate of transmitting a signal. The parameter selection unit 133 confirms the determined transmission rate with reference to predetermined bits stored in the register 127 of the controller 126. Then, the parameter selection unit 133 records the transmission rate in association with the port number confirmed at step S11, in the port management table 134.

(Step S13) The parameter selection unit 133 instructs the controller 126 to read cable length information. The controller 126 uses an I2C signal line or the like to read the cable length information from the ROM 43 provided in the connector 41, and outputs it to the parameter selection unit 133. The parameter selection unit 133 records the cable length indicated by the cable length information, in association with the port confirmed at step S11, in the port management table 134.

(Step S14) The parameter selection unit 133 accesses the parameter table 129 stored in the ROM 128 via the controller 126, to confirm the transmission rates registered in the parameter table 129.

(Step S15) The parameter selection unit 133 determines whether the current transmission rate recorded in the port management table 134 at step S12 is registered in the parameter table 129 or not. If the current transmission rate is registered, the process proceeds to step S17. If the current transmission rate is not registered, the process proceeds to step S16.

(Step S16) The parameter selection unit 133 selects a transmission rate that is the closest to the current transmission rate from the parameter table 129, and records the closest transmission rate in the port management table 134. As the closest transmission rate, for example, a transmission rate that is the maximum out of transmission rates lower than the current transmission rate is selected. In this connection, the parameter selection unit 133 may be designed to specify a smaller transmission rate one by one, starting with the current transmission rate, and cause the controller 126 to confirm whether the specified transmission rate is registered in the parameter table 129 or not.

(Step S17) The parameter selection unit 133 accesses the parameter table 129 stored in the ROM 128 via the controller 126 to confirm the cable lengths registered in the parameter table 129.

(Step S18) The parameter selection unit 133 determines whether the length of the cable 40 registered in the port management table 134 at step S13 is registered in the parameter table 129 or not. If the length of the cable 40 is registered, the process proceeds to step S20. If the length of the cable 40 is not registered, the process proceeds to step S19.

(Step S19) The parameter selection unit 133 selects a cable length that is the closest to the length of the cable 40, from the parameter table 129, and records the closest cable length in the port management table 134. As the closest cable length, a cable length that is the maximum out of cable lengths shorter than the length of the cable 40 is selected. In this connection, similarly to step S16, the parameter selection unit 133 may be designed to specify a shorter cable length one by one, and cause the controller 126 to confirm whether the specified cable length is registered in the parameter table 129 or not.

(Step S20) The parameter selection unit 133 reads parameters corresponding to a combination of the transmission rate and cable length recorded in association with the port number in the port management table 134, from the parameter table 129 of the ROM 128 via the controller 126.

(Step S21) The parameter selection unit 133 selects one of the ports #1 to #4.

(Step S22) The parameter selection unit 133 writes a parameter for the port selected at step S21, in the register 127 of the controller 126. If the selected port is a port that receives a signal, the parameter selection unit 133 writes the parameter for equalization. If the selected port is a port that transmits a signal, the parameter selection unit 133 writes the parameter for emphasis. In this connection, if the parameter registered in the parameter table 129 is not a register value, the parameter selection unit 133 converts the parameter into a register value, and then writes the value.

(Step S23) The parameter selection unit 133 determines whether all ports have been selected at step S21 or not. If all ports have been selected, the process is completed. If any ports have not been selected, then the process proceeds back to step S21.

With the above process, the controller 126 adjusts the levels of the equalization for the receivers 122 and 123 and the levels of the emphasis for the transmitters 124 and 125 on the basis of the values written in the register 127. In this connection, steps S11 to S23 are executed when the server apparatus 100 and device 200 are connected to each other. In addition, steps S14 to S23 may be executed each time the transmission rate between the server apparatus 100 and the device 200 is changed.

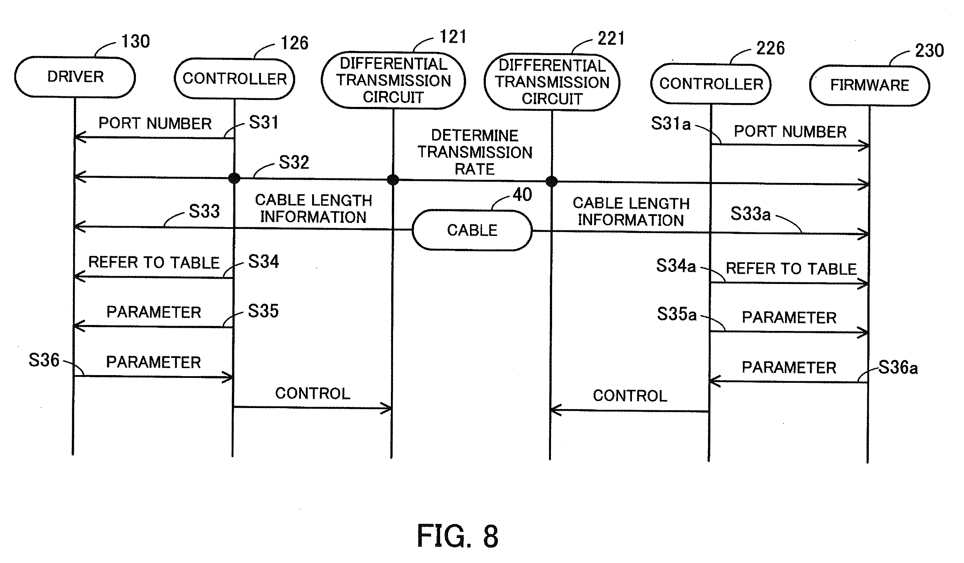

FIG. 8 is a sequence diagram illustrating the parameter setting process.

In the server apparatus 100, the driver 130 accesses the controller 126 to confirm the port number of a port for transmitting or receiving a signal (step S31). Similarly, in the device 200, the firmware 230 accesses the controller 226 to confirm the port number of a port for transmitting or receiving a signal (step S31a).

The driver 130 and firmware 230 control the controllers 126 and 226, respectively, to determine a transmission rate between the server apparatus 100 and the device 200 (step S32). To determine the transmission rate, the driver 130 and firmware 230 execute negotiation, training sequence, and so forth, for example.

In the server apparatus 100, the driver 130 reads the cable length information from the ROM 43 of the cable 40 via the controller 126 (step S33). Similarly, in the device 200, the firmware 230 reads the cable length information from the ROM 44 of the cable 40 via the controller 226 (step S33a).

In the server apparatus 100, the driver 130 confirms whether the transmission rate determined at step S32 and the cable length indicated by the cable length information read at step S33 are registered in the parameter table 129 in the ROM 128 or not (step S34). Similarly, in the device 200, the firmware 230 confirms whether the transmission rate determined at step S32 and the cable length indicated by the cable length information read at step S33a are registered in the parameter table in the ROM 228 or not (step S34a).

In the server apparatus 100, the driver 130 reads parameters corresponding to the transmission rate and cable length from the ROM 128 via the controller 126 (step S35). Similarly, in the device 200, the firmware 230 reads parameters corresponding to the transmission rate and cable length from the ROM 228 via the controller 226 (step S35a).

In the server apparatus 100, the driver 130 sets the parameters read at step S35 in the controller 126. The controller 126 then controls the differential transmission circuit 121 to adjust the levels of the equalization and emphasis performed by the differential transmission circuit 121 on the basis of the set parameters (step S36). In the device 200, the firmware 230 sets the parameters read at step S35a in the controller 226. The controller 226 then controls the differential transmission circuit 221 to adjust the levels of the equalization and emphasis performed by the differential transmission circuit 221 on the basis of the set parameters (step S36a).

According to the information processing system of the second embodiment, the level of signal conditioning such as equalization, emphasis, etc. is adjusted based on the current transmission rate and cable length. The signal conditioning is performed with the consideration of the transmission rate and cable length, which are causes that influence the amount of distortion in a signal, so that it is possible to improve the accuracy of the signal conditioning and reduce reception errors. It is also possible to adjust the level of signal conditioning for each port.

### (Third Embodiment)

The following describes a third embodiment. Differential features from the second embodiment will mainly be described, and explanation on the same features as the second embodiment will be omitted. In the second embodiment, one device is connected to a server apparatus. On the other hand, in the third embodiment, a server apparatus is provided with a plurality of interfaces, so that a plurality of devices is connected to the server apparatus.

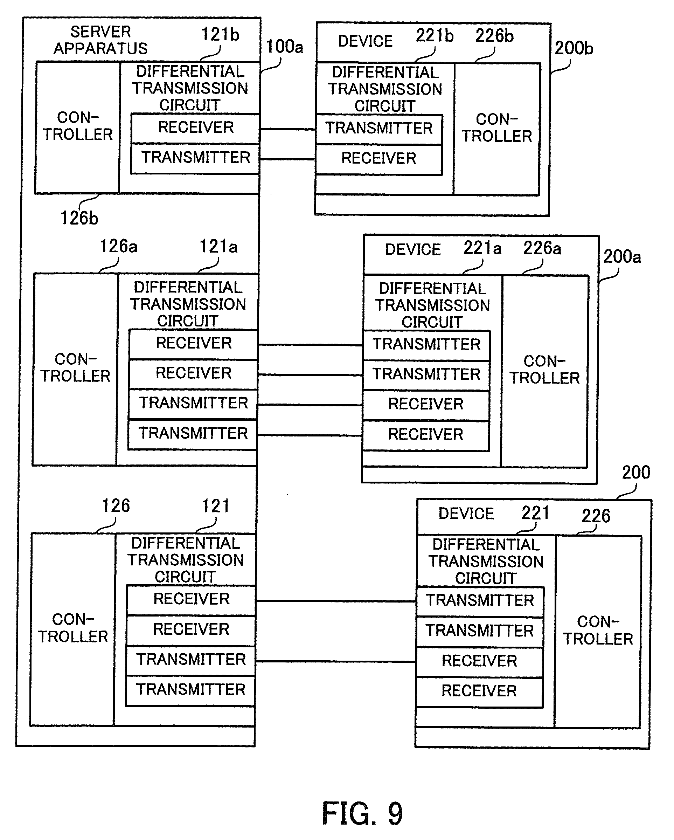

FIG. 9 is a block diagram illustrating interfaces according to the third embodiment. A server apparatus 100a includes at least three interfaces. The server apparatus 100a is connected to devices 200, 200a, and 200b with cables. For example, the device 200 is a DVD drive and the devices 200a and 200b are HDDs.

The server apparatus 100a includes a differential transmission circuit 121 and a controller 126. The device 200 includes a differential transmission circuit 221 and a controller 226. The differential transmission circuit 121 of the server apparatus 100a and the differential transmission circuit 221 of the device 200 are connected to each other with a cable. The differential transmission circuits 121 and 221 each include two receivers and two transmitters. One receiver and one transmitter are used for signal transmission.

The server apparatus 100a includes a differential transmission circuit 121a and a controller 126a. The device 200a includes a differential transmission circuit 221a and a controller 226a. The differential transmission circuit 121a of the server apparatus 100a and the differential transmission circuit 221a of the device 200a are connected to each other with a cable. The differential transmission circuits 121a and 221a each include two receivers and two transmitters. All of the receivers and transmitters are used for signal transmission.

The server apparatus 100a includes a differential transmission circuit 121b and a controller 126b. The device 200b includes a differential transmission circuit 221b and a controller 226b. The differential transmission circuit 121b of the server apparatus 100a and the differential transmission circuit 221b of the device 200b are connected to each other with a cable. The differential transmission circuits 121b and 221b each include one receiver and one transmitter. All of the receivers and transmitters are used for signal transmission.

The three cables used for connection with the devices 200, 200a, and 200b may not be the same in length. A driver that runs on the server apparatus 100a may be designed to read cable length information from a ROM provided in each cable, via the controllers 126, 126a, and 126b, and confirm the length of each cable. In addition, transmission rates between the server apparatus 100a, and the devices 200, 200a, and 200b may not be the same. The driver may be designed to determine a transmission rate for each interface. The driver selects a parameter corresponding to a transmission rate and cable length, for each port of each interface, and applies the parameter to the port.

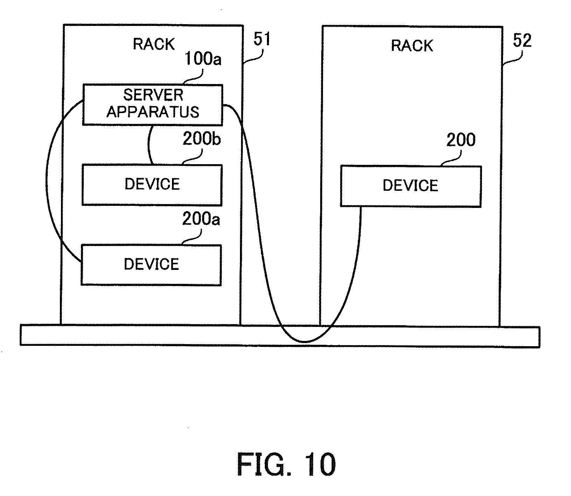

FIG. 10 illustrates an example of installation of a server apparatus and devices. The server apparatus 100a and devices 200a and 200b are installed in a rack 51. The device 200 is installed in a rack 52. As the server apparatus 100a and device 200 are in different racks, they are connected to each other with a long cable. On the other hand, as the server apparatus 100a and devices 200a and 200b are in the same rack, they are connected to each other with short cables. The server apparatus 100a adjusts the levels of equalization and emphasis for each interface, with the consideration of the length of a cable connected to the interface.

Similarly to the second embodiment, the information processing system of the third embodiment makes it possible to improve the accuracy of signal conditioning and reduce reception errors. In addition, the server apparatus 100a is able to adjust the level of signal conditioning according to a transmission rate and cable length for each interface. Therefore, even in the case where plural kinds of devices having different communication capabilities are connected to the server apparatus 100a, it is possible to improve the accuracy of the signal conditioning. In addition, even in the case where a plurality of devices is connected to the server apparatus 100a with a plurality of cables of different lengths, it is possible to improve the accuracy of the signal conditioning. Therefore, the server apparatus 100a and devices 200, 200a, and 200b are flexible in arrangement and connections.

### (Fourth Embodiment)

The following describes a fourth embodiment. Differential features from the second and third embodiments will mainly be described, and explanation on the same features as the second and third embodiments will be omitted. In the third embodiment, one device is connected to one interface provided in a server apparatus. On the other hand, in the fourth embodiment, a plurality of devices is connected to one interface.

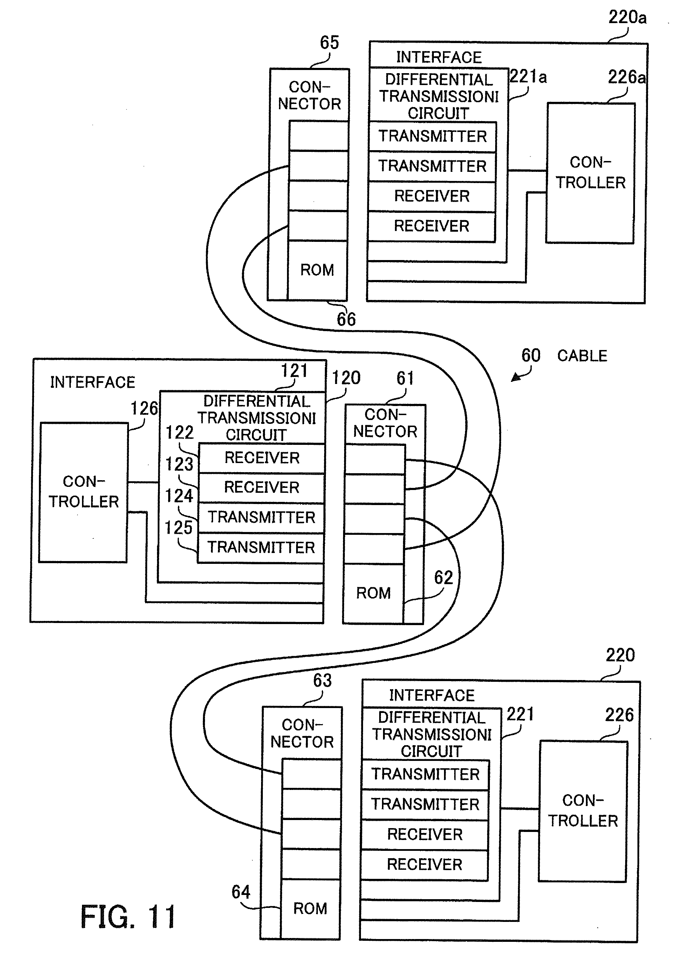

FIG. 11 is a block diagram illustrating interfaces according to the fourth embodiment. An interface 120 of a server apparatus and interfaces 220 and 200a of a device are connected with a cable 60. The cable 60 includes connectors 61, 63, and 65. Four pairs of signal lines connected to the connector 61 are split in such a way that two pairs of signal lines out of four are connected to the connector 63, and the other two pairs of signal lines are connected to the connector 65. Using the cable 60 having such a split enables two devices to be connected to one interface 120 of the server apparatus.

The interface 120 includes a differential transmission circuit 121 and a controller 126. The differential transmission circuit 121 is connected to the connector 61. Signal lines are connected to all of four ports provided in the connector 61. Therefore, all of receivers 122 and 123 and transmitters 124 and 125 provided in the differential transmission circuit 121 perform signal processing. The controller 126 reads cable length information from a ROM 62 provided in the connector 61.

The interface 220 includes a differential transmission circuit 221 and a controller 226. The differential transmission circuit 221 is connected to the connector 63. Signal lines are connected to two of four ports provided in the connector 63. Therefore, one of two receivers and one of two transmitters provided in the differential transmission circuit 221 perform signal processing. The controller 226 reads cable length information from a ROM 64 provided in the connector 63.

The interface 220a includes a differential transmission circuit 221a and a controller 226a. The differential transmission circuit 221a is connected to the connector 65. Signal lines are connected to two of four ports provided in the connector 65. Therefore, one of two receivers and one of two transmitters provided in the differential transmission circuit 221a perform signal processing. The controller 226a reads cable length information from a ROM 66 provided in the connector 65.

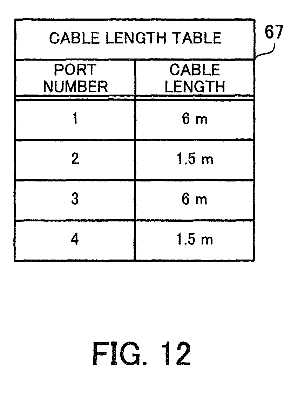

FIG. 12 illustrates an example of a cable length table. A cable length table 67 is stored in the ROM 62 of the connector 61. Such a cable length table is stored in the ROM 64 of the connector 63 and the ROM 66 of the connector 65. The cable length table 67 includes the following fields: Port Number and Cable Length.

The Port Number field indicates the identification information of ports #1 to #4 provided in the connector 61. The Cable Length field indicates the lengths of signal lines connected to the respective ports. For example, a signal line between the connectors 61 and 63 (a signal line between ports #1 and #3) is 6m in length. A signal line between the connectors 61 and 65 (a signal line between ports #2 and #4) is 1.5m in length.

A driver running on the server apparatus 100 reads the cable length table 67 from the ROM 62 of the connector 61, and confirms the cable length of each port. Then, the driver records the cable length in association with the port number in the port management table 134 illustrated in FIG. 6. The driver selects a parameter corresponding to the transmission rate and cable length for each port, and applies the parameter to the port. Therefore, different parameters for equalization may be applied to the receivers 122 and 123. In addition, different parameters for emphasis may be applied to the transmitters 124 and 125.

Similarly to the second and third embodiments, the information processing system of the fourth embodiment makes it possible to improve the accuracy of signal conditioning and reduce reception errors. In addition, using the cable 60 in which signal lines are split allows a plurality of devices to be connected to the interface 120, and it is possible to adjust the level of the signal conditioning according to a transmission rate and the length of a signal line for each port of the interface 120.

### (Fifth Embodiment)

The following describes a fifth embodiment. Differential features from the second embodiment will mainly be described, and explanation on the same features as the second embodiment will be omitted. In the second embodiment, a server apparatus is connected directly to a device. On the other hand, in the fifth embodiment, a server apparatus is connected to devices via a switch.

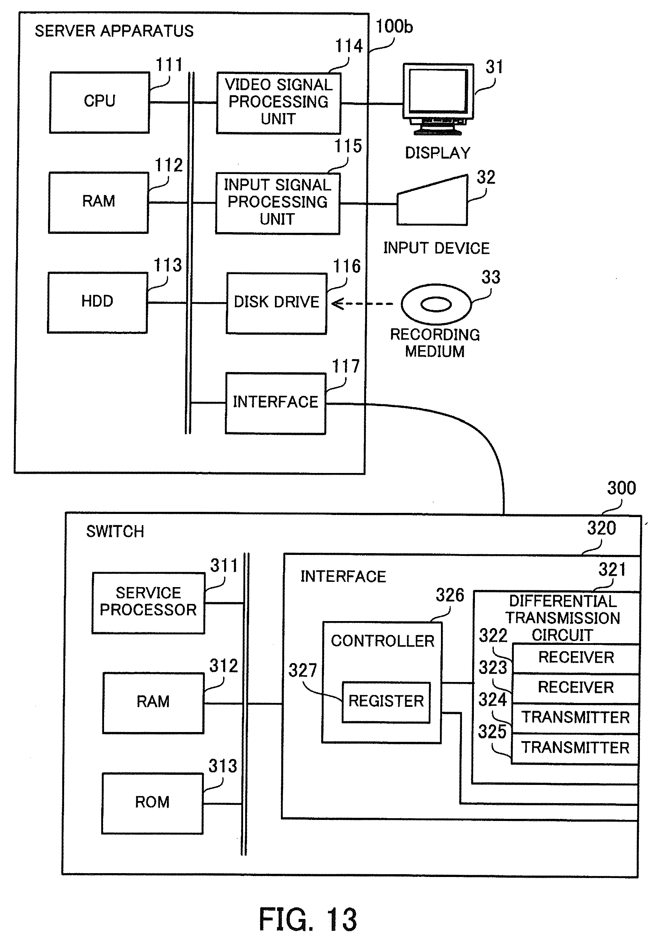

FIG. 13 is a block diagram illustrating an information processing system according to the fifth embodiment. An information processing system of the fifth embodiment includes a server apparatus 100b and a switch 300. One or more devices are connected to the switch 300 with cables. The server apparatus 100b communicates with the one or more devices via the switch 300.

The server apparatus 100b includes a CPU 111, a RAM 112, an HDD 113, a video signal processing unit 114, an input signal processing unit 115, a disk drive 116, and an interface 117. The units other than the interface 117 have the same functions as those explained in the second embodiment. The interface 117 communicates with the switch 300 via a cable. The interface 117 may be called HBA (Host Bus Adapter).

The switch 300 includes a service processor 311, a RAM 312, a ROM 313, and an interface 320. The service processor 311 is an arithmetic device for controlling the switch 300. The RAM 312 is a volatile memory for temporarily storing a program and data to be used by the service processor 311. The ROM 313 is a non-volatile memory for storing programs such as firmware program and data to be used in information processing. The ROM 313 stores the parameter table 129 illustrated in FIG. 5.

In this connection, the service processor 311 may be designed to communicate with the server apparatus 100b using the interface 320. The service processor 311 may also be designed to communicate with the server apparatus 100b using another network interface provided in the switch 300. For example, LAN (Local Area Network) interface may be used.

The interface 320 communicates with a device via a cable. The switch 300 may include a plurality of interfaces. The interface 320 includes a differential transmission circuit 321 and a controller 326. The differential transmission circuit 321 includes receivers 322 and 323 and transmitters 324 and 325. The controller 326 includes a register 327.

The differential transmission circuit 321 transmits and receives signals with the differential transmission method. The differential transmission circuit 321 includes four ports, and performs signal processing including signal conditioning at each port. The receivers 322 and 323 equalize signals received from devices. The transmitters 324 and 325 emphasize signals to be transmitted to the devices.

The controller 326 controls signal processing performed by the differential transmission circuit 321. The controller 326 uses values stored in the register 327 to adjust the levels of the equalization performed by the receivers 322 and 323 and the levels of the emphasis performed by the transmitters 324 and 325. In addition, the controller 326 reads cable length information from a ROM provided in a connector of the cable. The register 327 stores values for controlling the equalization and emphasis and a value indicating a transmission rate determined between the interface 320 and a device.

A driver running on the server apparatus 100b makes an inquiry to the service processor 311 of the switch 300 for a transmission rate determined in cooperation with a device. The service processor 311 confirms the transmission rate with reference to the register 327 of the controller 326, and notifies the driver of it. The driver also requests the service processor 311 to read cable length information. The service processor 311 then reads the cable information from a ROM provided in the connector of the cable via the controller 326, and transmits it to the driver.

The driver selects parameters corresponding to a transmission rate and cable length, for each port of the differential transmission circuit 321 with reference to the parameter table 129 stored in the ROM 313 via the service processor 311. Then, the driver sends the selected parameters to the service processor 311. The service processor 311 then applies the parameters received from the server apparatus 100b to the equalization and emphasis of the differential transmission circuit 321. For example, the service processor 311 writes register values received as the parameters, in the register 327. Thereby, the differential transmission circuit 321 performs signal conditioning at a level appropriate for the transmission rate and cable length.

Similarly to the second embodiment, the information processing system of the fifth embodiment makes it possible to improve the accuracy of signal conditioning and reduce reception errors. In addition, the server apparatus 100b is able to control the signal conditioning such as equalization, emphasis, etc. performed in the switch 300. Therefore, even in the case where the server apparatus 100b communicates with many devices via the switch 300, it is possible to dynamically determine a transmission rate for each device, and to use cables of desired lengths.

It is noted that the communication control method according to the second to fifth embodiments may be implemented by causing the server apparatus 100, 100a, and 100b or device 200, 200a, and 200b, which has computer functions, to execute a program for communication control. The program may be recorded on a computer-readable recording medium (for example, recording medium 33). Recording media include magnetic disks, optical discs, magneto-optical disks, semiconductor memories, etc., for example. The magnetic disks include FD and HDD. The optical discs include CD, CD-R (Recordable), CD-RW (Rewritable), DVD, DVD-R, and DVD-RW.

To distribute the program, portable recording media, on which the program is recorded, may be provided. Alternatively, the program may be stored in the storage device of another computer and may be distributed from the other computer over a network. The server apparatus 100, 100a, and 100b or device 200, 200a, and 200b stores in its local storage device the program recorded on a portable recording medium or received from the other computer, for example, and then read the program from the local storage device, and run the program. In this connection, the server apparatus 100, 100a, and 100b or device 200, 200a, and 200b may run the program directly from the portable recording medium, or may run the program while receiving the program from the other computer.

The foregoing is merely illustrative of the principles of the present invention. Further, since numerous modifications and changes will readily occur to those skilled in the art, it is not desired to limit the invention to the exact construction and applications illustrated and described above, and accordingly, all suitable modifications and equivalents may be regarded as falling within the scope of the invention in the appended claims and their equivalents.

### Reference Signs List

- 10: Information processing apparatus
- 11: Signal processing unit
- 12: Storage unit
- 12a: Parameter information
- 13: Control unit
- 20: Device

## Claims

1. An information processing apparatus capable of communicating with a device at a plurality of transmission rates, the information processing apparatus comprising:
a signal processing unit configured to process a signal that is transmitted to and from the device;
a storage unit configured to store parameter information indicating a correspondence between a transmission rate and a parameter for controlling signal conditioning performed by the signal processing unit; and
a control unit configured to select a parameter appropriate for a transmission rate determined in cooperation with the device, with reference to the parameter information stored in the storage unit, and apply the selected parameter to the signal processing unit.

2. The information processing apparatus according to claim 1, wherein:
the parameter information indicates a correspondence among a cable length of a cable connecting the signal processing unit and the device, the transmission rate, and the parameter;
the cable includes another storage unit configured to store cable information indicating the cable length of the cable; and
the control unit selects a parameter appropriate for the cable length indicated by the cable information stored in said another storage unit and the determined transmission rate.

3. The information processing apparatus according to claim 1 or 2, wherein:
the signal processing unit includes a plurality of ports; and
the control unit selects a parameter for each port of the signal processing unit, and applies the selected parameter to said each port.

4. The information processing apparatus according to any one of claims 1 to 3, wherein, when the transmission rate to and from the device is changed, the control unit re-selects a parameter appropriate for the changed transmission rate.

5. An information processing system capable of communicating with a device at a plurality of transmission rates, the information processing system comprising:
a relay apparatus including
a signal processing unit configured to process a signal that is transmitted to and from the device, and
a storage unit configured to store parameter information indicating a correspondence between a transmission rate and a parameter for controlling signal conditioning performed by the signal processing unit; and
an information processing apparatus including
a connecting unit configured to connect with the relay apparatus; and
a control unit configured to select a parameter appropriate for a transmission rate determined between the information processing apparatus and the device, with reference to the parameter information stored in the storage unit via the connecting unit, and to apply the selected parameter to the signal processing unit via the connecting unit.

6. A communication control method executed by an information processing apparatus capable of communicating with a device at a plurality of transmission rates, the communication control method comprising:
detecting a transmission rate determined between the information processing apparatus and the device;
selecting a parameter appropriate for the determined transmission rate with reference to a storage unit storing parameter information indicating a correspondence between a transmission rate and a parameter for controlling signal conditioning of a signal that is transmitted to and from the device; and
applying the selected parameter to the information processing apparatus or a relay apparatus that processes a signal between the information processing apparatus and the device.
